# EUROPÄISCHE PATENTANMELDUNG

(11) **EP 1 512 902 A2**
(43) Veröffentlichungstag der Anmeldung: **09.03.2005**
(21) Anmeldenummer: 04020760.7
(22) Anmeldetag: 01.09.2004
(51) Int. Cl.: F21S 8/02, F21Y 101/02, F21V 7/00

(54) **Leuchte zur Anbringung an einer Gebäudefläche oder Gebäudeteilfläche**

(30) Priorität: 04.09.2003 DE 10341219
(71) Anmelder: ERCO Leuchten GmbH, D-58507 Lüdenscheid (DE)
(72) Erfinder: Maack, Tim Henrik, 58509 Lüdenscheid (DE)
(74) Vertreter: Patentanwälte Ostriga, Sonnet, Wirths & Roche

(57) **Zusammenfassung**

Die Erfindung betrifft u.a. eine Leuchte (10) zur Anbringung an einer Gebäudefläche oder einer Gebäudeteilfläche, wie z.B. an einer Decke, einer Wand oder einem Boden eines Raumes, umfassend eine Trageinrichtung (12) für mehrere Leuchtdioden (29) und ein Lichtemissionselement (21), welches eine der Trageinrichtung (12) benachbarte Lichteintrittsfläche (28) für das von den Leuchtdioden (29) ausgesandte Licht, eine Lichtaustrittsfläche (30) und einen Lichtführungsabschnitt (27) umfasst, der die Lichteintrittsfläche (28) und die Lichtaustrittsfläche (30) miteinander verbindet.

Die Besonderheit besteht darin, dass der Lichtführungsabschnitt (27) gekrümmte Innenflächen (20) aufweist, und dass eine Weiterleitung des Lichtes von der Lichteintrittsfläche (28) zu der Lichtaustrittsfläche (30) durch den Lichtführungsabschnitt (27) hindurch im wesentlichen über mehrfache Reflexionen an den Innenflächen (20) erfolgt.

## Beschreibung

Die Erfindung bezieht sich zunächst auf eine Leuchte zur Anbringung an einer Gebäudefläche oder einer Gebäudeteilfläche, wie z.B. an einer Decke, einer Wand oder einem Boden eines Raumes, umfassend eine Trageinrichtung für mehrere Leuchtdioden und ein Lichtemissionselement, welches eine der Trageinrichtung benachbarte Lichteintrittsfläche für das von den Leuchtdioden ausgesandte Licht, eine Lichtaustrittsfläche und einen Lichtführungsabschnitt umfasst, der die Lichteintrittsfläche und die Lichtaustrittsfläche miteinander verbindet.

Die Lichteintritts- und die Lichtaustrittsfläche sind im Sinne dieser Patentanmeldung somit Bestandteil des Lichtführungsabschnittes, jedoch nicht Bestandteil des Lichtemissionselementes.

Zusätzlich kann eine weitere Lichtquelle vorgesehen sein. Das Licht der Leuchtdioden stellt dann z.B. ein Notlicht zur Verfügung oder verbessert den optischen Eindruck, den die Leuchte vermittelt. So kann sich das Licht der Leuchtdioden farblich und auch in der Lichtintensität von dem Licht der weiteren Lichtquelle unterscheiden und somit beispielsweise ein Akzentlicht bereitstellen. Eine andere Funktion des von den LED's ausgesandten Lichtes kann die Kontrastverminderung im Bereich der Leuchte außerhalb der weiteren Lichtquelle sein.

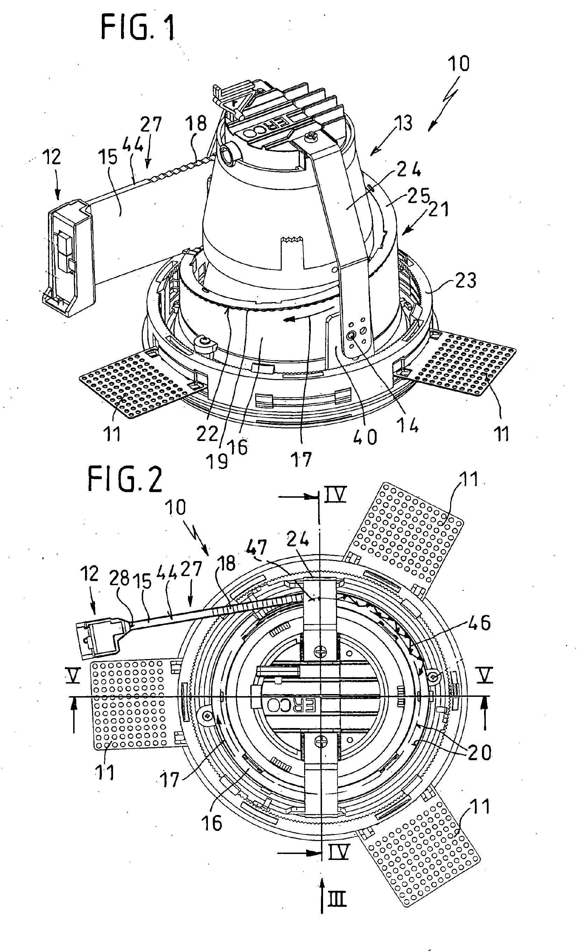

Eine Leuchte gemäß dem Oberbegriff des Anspruches 1 ist in der EP 1 043 542 A2 beschrieben. Hier sind Lichtemissionsplatten vorgesehen, die das Licht der Leuchtdioden abstrahlen. Es wird vorgeschlagen, die Leuchtdioden hinter, in oder seitlich von den Lichtemissionsplatten anzuordnen. Gemäß dem Ausführungsbeispiel der Fig. 2 umgibt die Lichtemissionsplatte die weitere Lichtquelle ringförmig.

Die Aufgabe der vorliegenden Erfindung besteht darin, ausgehend von der EP 1 043 542 A2 eine Leuchte gemäß dem Oberbegriff des Anspruches 1 derart weiterzubilden, dass bei einfachem Aufbau der Leuchte ein homogenisierter Austritt des Lichtes der Leuchtdioden aus dem Lichtemissionselement ermöglicht wird.

Die Erfindung löst diese Aufgabe mit den Merkmalen des Anspruches 1, insbesondere mit denen des Kennzeichenteils, und ist demgemäß dadurch gekennzeichnet, dass der Lichtführungsabschnitt gekrümmte Innenflächen aufweist, und dass eine Weiterleitung des Lichtes von der Lichteintrittsfläche zu der Lichtaustrittsfläche durch den Lichtführungsabschnitt hindurch im wesentlichen über mehrfache Reflexionen an den Innenflächen erfolgt.

Das Prinzip der Erfindung besteht somit im wesentlichen darin, dass durch mehrfache Reflexion der LED-Lichtkegel an den gekrümmten Innenflächen des Lichtführungsabschnittes eine Aufweitung der einzelnen Lichtkegel und dadurch eine Homogenisierung des LED-Lichtes bewirkt wird. Dabei können die Innenflächen des Lichtführungsabschnittes z.B. mindestens teilweise verspiegelt sein oder das LED-Licht mittels Totalreflexion weiterleiten. Die Homogenisierung des Lichtes verbessert den ästhetischen Gesamteindruck der Leuchte dadurch, dass nach der Vermischung des Lichtes der Leuchtdioden die Lichtaustrittsfläche gleichmäßig ausgeleuchtet wird.

Der Lichtführungsabschnitt kann massiv ausgebildet sein und aus einem lichtdurchlässigen Material, wie z.B. Glas oder Kunststoff, bestehen. Durch die Wahl des Materials kann die vergleichmäßigende Wirkung des Lichtemissionselementes weiter verbessert werden. Die Wahl geeigneter Brechungsindizes und/oder das Einbringen von Streukörpern oder Störstellen in das Material des Lichtführungsabschnittes können die Lichthomogenisierung unterstützen. Selbstverständlich können die Innenflächen des Lichtführungsabschnittes, die Lichteintrittsfläche und/oder die Lichtaustrittsfläche zur Vergleichmäßigung des aus der Leuchte austretenden Lichtes eine Mikrostruktur, wie z.B. eine Vielzahl von Mikroprismen, aufweisen. Das Material des Lichtführungsabschnittes kann beispielsweise auch gefärbt sein.

In der EP 1 043 542 A2 wird bereits vorgeschlagen, die Lichtemissionsplatte mit fein verteilten Partikeln zu versehen, die eine Streuung des auftreffenden Lichtes bewirken. Alternativ oder zusätzlich dazu kann die Lichtaustrittsfläche der Lichtemissionsplatte, z.B. durch Anrauhen der Fläche oder durch Aufbringen von Mikroprismen, strukturiert werden. Die vorgeschlagenen Methoden sind bei alleiniger Anwendung jedoch entweder ungeeignet ein homogenes LED-Licht zu erzeugen oder sind technisch sehr aufwändig.

Bei einer Einkopplung des LED-Lichtes von der Seite her in die Lichtemissionsplatte wäre es z.B. notwendig, den von den LEDs weiter entfernten Teil der Platte mit einer höheren Dichte an Streukörpern zu versehen, als den unmittelbar an die LEDs angrenzenden Teil, um in allen Bereichen eine gleichmäßige Lichtemission zu erhalten. Die Herstellung einer solchen Platte muss als sehr aufwändig bezeichnet werden.

Auch die alleinige Anrauhung der Oberfläche oder das Aufbringen einer mikroprismatischen Struktur bewirkt nur eine unzureichende Homogenisierung. Bei vorgegebener Struktur hängt der Homogenisierungsgrad vom Abstand und vom Öffnungswinkel der ausgesandten Lichtkegel der Leuchtdioden ab. Eine vollständige Homogenisierung des Lichtes der Leuchtdioden ist auf diese Weise praktisch nicht zu erreichen; die Lichtemission der Lichtemissionsplatte wird in der Nähe der Leuchtdioden ein Maximum aufweisen.

Die Erfindung ermöglicht bei einfachem Aufbau der Leuchte eine Homogenisierung des Lichtes der Leuchtdioden. Insbesondere das Lichtemissionselement kann auf besonders einfache Weise gefertigt werden. Eine technisch aufwändige Herstellung von Lichtemissionsplatten mit genau definierter Streukörperdichte oder eine an das Leuchtverhalten der LEDs angepasste Strukturierung der Lichtemissionsplatte mit Mikroprismen ist nicht erforderlich. Der gewünschte Homogenisierungseffekt wird bereits durch Mehrfachreflexionen des eingestrahlten Lichtes an gekrümmten Innenflächen des Lichtführungsabschnittes bewirkt.

Gemäß einer vorteilhaften Ausgestaltung der Erfindung ist die Lichteintrittsfläche derart von der Lichtaustrittsfläche beabstandet und relativ zu dieser angeordnet, dass höchstens ein geringer Teil der Lichtaustrittsfläche innerhalb des Lichtführungsabschnittes auf die Lichteintrittsfläche projizierbar ist. Ein Teil der Lichtaustrittsfläche ist genau dann innerhalb des Lichtführungsabschnittes auf die Lichteintrittsfläche projizierbar, wenn alle Punkte dieser Teilfläche durch gerade Linien, die vollständig innerhalb des Lichtführungsabschnittes verlaufen, mit der Lichteintrittsfläche verbunden werden können. Der Großteil des LED-Lichtes wird demnach mindestens einmal an den Innenflächen des Lichtführungsabschnittes reflektiert, bevor er zur Lichtaustrittsfläche gelangt.

Durch diese Ausgestaltung der Erfindung wird eine Gestaltung des Lichtemissionselementes mit einem sehr langen Lichtweg bei kompakter Bauweise ermöglicht. Über die Verlängerung des Lichtweges kann die Anzahl der Reflexionen erhöht werden, die das Licht von der Lichteintrittsfläche bis zur Lichtaustrittsfläche erfährt. Bei dieser Ausgestaltung können die Leuchtdioden in vielfältiger Weise von der Lichtaustrittsfläche beabstandet angeordnet werden, wodurch mehr Spielraum bei der Gestaltung der Leuchte entsteht.

Die Erfindung bezieht sich nach einem weiteren Aspekt auf eine Leuchte gemäß dem Oberbegriff des Anspruches 3. Es handelt sich dabei um eine Leuchte zur Anbringung an einer Gebäudefläche oder einer Gebäudeteilfläche, wie z.B. an einer Decke, einer Wand oder einem Boden eines Raumes, umfassend eine Trageinrichtung für mehrere Leuchtdioden, ein Lichtemissionselement, welches eine der Trageinrichtung benachbarte Lichteintrittsfläche für das von den Leuchtdioden ausgesandte Licht, eine erste Lichtaustrittsfläche und einen Lichtführungsabschnitt umfasst, der die Lichteintrittsfläche und die erste Lichtaustrittsfläche miteinander verbindet, sowie eine Aufnahmeeinrichtung für eine zweite Lichtquelle, und eine dieser Aufnahmeeinrichtung zugeordnete zweite Lichtaustrittsfläche.

Die Aufgabe der vorliegenden Erfindung besteht darin, ausgehend von der EP 1 043 542 A2, aus der eine derartige Leuchte bekannt ist, eine Leuchte gemäß dem Oberbegriff des Anspruches 3 in einer Weise weiterzubilden, dass bei einfachem Aufbau der Leuchte ein homogenisierter Austritt des Lichtes der Leuchtdioden aus dem Lichtemissionselement ermöglicht wird.

Die Erfindung löst diese Aufgabe mit den Merkmalen des Anspruches 3, insbesondere mit denen des Kennzeichenteils, und ist demgemäß dadurch gekennzeichnet, dass die Lichteintrittsfläche derart von der ersten Lichtaustrittsfläche beabstandet und relativ zu dieser angeordnet ist, dass höchstens ein geringer Teil der ersten Lichtaustrittsfläche innerhalb des Lichtführungsabschnittes auf die Lichteintrittsfläche projizierbar ist.

Das Prinzip der Erfindung besteht somit im wesentlichen darin, dem Lichtführungsabschnitt eine derartige geometrische Form zuzuordnen, dass Licht, kommend von der Lichteintrittsfläche, nicht geradlinig die erste Lichtaustrittsfläche erreichen kann, sondern zunächst an Innenflächen des Lichtführungsabschnittes reflektiert werden muss. Durch solche Reflexionen wird das LED-Licht vergleichmäßigt.

Durch diese Ausgestaltung ist es möglich, die Leuchtdioden beabstandet von der zweiten Lichtquelle anzuordnen und dadurch die LEDs und die zweite Lichtquelle zumindest weitgehend thermisch zu isolieren, was die Lebensdauer der Leuchtdioden wesentlich erhöht. Die erfindungsgemäße Lösung ermöglicht somit bei einfacher Bauweise zugleich eine thermische Isolierung und einen homogenisierten Lichtaustritt.

Diese erfindungsgemäße Lösung hat den Vorteil, dass die Ausgestaltung des Lichtemissionselementes unabhängig von der Einstrahlrichtung und unabhängig von dem Öffnungswinkel des von den LEDs abgestrahlten Lichtes zu einem Homogenisierungseffekt führt. Das Lichtemissionselement ist so gestaltet, dass der überwiegende Teil des von der Lichteintrittsfläche ausgehenden Lichtes nur über eine oder mehrere Reflexionen an Innenflächen des Elementes, und damit homogenisiert, zu der ersten Lichtaustrittsfläche gelangen kann. Desweiteren ermöglichen die Merkmale des Anspruches 3 eine Ausbildung des Lichtemissionselementes derart, dass das Licht einen möglichst langen Weg zwischen Lichteinritts- und Lichtaustrittsfläche durchlaufen muss, was ebenfalls zur Vergleichmäßigung des Lichtes beiträgt.

An dieser Stelle sei angemerkt, dass die Bezeichnungen Lichtaustrittsfläche und erste Lichtaustrittsfläche im Sinne der vorliegenden Patentanmeldung immer die Lichtaustrittsfläche des Lichtemissionselementes bezeichnen, wobei die Bezeichnung erste Lichtaustrittsfläche dann verwendet wird, wenn eine zweite Lichtquelle mit einer dieser zugeordneten zweiten Lichtaustrittsfläche vorgesehen ist.

Gemäß einer vorteilhaften Ausgestaltung der Erfindung weist der Lichtführungsabschnitt gekrümmte Innenflächen auf und erfolgt eine Weiterleitung des Lichtes von der Lichteintrittsfläche zu der ersten Lichtaustrittsfläche durch den Lichtführungsabschnitt hindurch im wesentlichen über mehrfache Reflexionen an den Innenflächen des Lichtführungsabschnittes. Solche Mehrfachreflexionen an gekrümmten Flächen führen, wie oben bereits dargelegt, zu einer Homogenisierung des LED-Lichtes und verbessern damit die Optik der Leuchte.

Nach einem weiteren Aspekt bezieht sich die Erfindung auf eine Leuchte gemäß dem Oberbegriff des Anspruches 5. Es handelt sich dabei um eine Leuchte zur Anbringung an einer Gebäudefläche oder einer Gebäudeteilfläche, wie z.B. an einer Decke, einer Wand oder einem Boden eines Raumes, insbesondere im Sinne der vorhergehenden Ansprüche, umfassend eine Trageinrichtung für mehrere Leuchtdioden, ein Lichtemissionselement, welches eine der Trageinrichtung benachbarte Lichteintrittsfläche für das von den Leuchtdioden ausgesandte Licht, eine erste im wesentlichen kreisringförmig ausgebildete Lichtaustrittsfläche und einen Lichtführungsabschnitt aufweist, der die Lichteintrittsfläche und die erste Lichtaustrittsfläche miteinander verbindet, eine Aufnahmeeinrichtung für eine zweite Lichtquelle, und eine dieser Aufnahmeeinrichtung zugeordnete zweite Lichtaustrittsfläche, die von der ersten Lichtaustrittsfläche umschlossen wird.

Eine solche Leuchte ist ebenfalls aus der EP 1 043 542 A2 bekannt. Das Lichtemissionselement ist dort nach Fig. 2 als kreisringförmige Lichtemissionsplatte ausgebildet. Die Leuchtdioden werden dabei in unmittelbarer Nähe der Lichtaustrittsfläche angeordnet, z.B. direkt hinter, seitlich von oder in der Lichtemissionsplatte. Diese kreisringförmige Lichtemissionsplatte umschließt eine kreisscheibenförmige Lichtaustrittsfläche einer weiteren Lichtquelle.

Die Aufgabe der vorliegenden Erfindung besteht darin, ausgehend von der EP 1 043 542 A2 eine Leuchte gemäß dem Oberbegriff des Anspruches 5 derart weiterzubilden, dass bei einfachem Aufbau der Leuchte ein homogenisierter Austritt des Lichtes der Leuchtdioden aus dem Lichtemissionselement ermöglicht wird.

Die Erfindung löst diese Aufgabe mit den Merkmalen des Anspruches 5, insbesondere mit denen des Kennzeichenteils, und ist demgemäß dadurch gekennzeichnet, dass das Lichtemissionselement einen im wesentlichen ringförmigen Abschnitt und einen Einstrahlabschnitt umfasst, wobei der Einstrahlabschnitt die Trageinrichtung der Leuchtdioden mit dem ringförmigen Abschnitt verbindet und wobei die Höhe des ringförmigen Abschnitts größer ist als seine Wandstärke.

Das Prinzip der Erfindung besteht somit im wesentlichen darin, ein Lichtemissionselement bereitzustellen, welches eine Einstrahlung des LED-Lichts in Umfangsrichtung und eine Weiterleitung in Umfangsrichtung ermöglicht. Das LED-Licht kann schon im Einstrahlabschnitt durch Reflexionen teilweise homogenisiert werden und in Umfangsrichtung in den ringförmigen Abschnitt eingestrahlt werden, wo es sich durch Reflexionen an gekrümmten Innenflächen dieses Abschnitts fortpflanzt. Durch diese Mehrfachreflexionen wird das Licht weiter vergleichmäßigt.

Der ringförmige Abschnitt ist hoch ausgebildet, in jedem Fall höher als die Wandstärke, und ermöglicht dadurch, dass das LED-Licht entlang der Ringwindung propagieren kann und mehrere Umläufe innerhalb des ringförmigen Abschnittes durchläuft, bevor es aus der Leuchte austritt. Dieser Effekt kann dadurch unterstützt werden, dass das LED-Licht durch den Einstrahlabschnitt in Umfangsrichtung eingestrahlt wird. Eine entsprechend hohe Ausbildug des ringförmigen Anschnitts ermöglicht dabei erst eine Einstrahlung in Umfangsrichtung und eine Weiterleitung mit mehreren Umläufen.

Die Erfindung ermöglicht es auch, durch entsprechende Gestaltung des Einstrahlabschnittes, die Leuchtdioden beabstandet von der zweiten Lichtquelle anzuordnen. Dadurch können die Leuchtdioden von der zweiten Lichtquelle thermisch getrennt werden, was die Lebensdauer der Leuchtdioden wesentlich erhöht.

Die LEDs können einander benachbart an einem gemeinsamen Ort angeordnet werden, und können trotzdem eine homogene Beleuchtung der kreisringförmig ausgebildeten Lichtaustrittsfläche ermöglichen. Eine räumliche Verteilung der LED's ist nicht erforderlich. Dadurch wird es möglich, die Leuchtdioden zu einer Baueinheit zusammenzufassen, was den Aufbau der Leuchte erheblich vereinfacht, da auf bestehende Baueinheiten zurückgegriffen werden kann.

Gemäß einer vorteilhaften Ausgestaltung der Erfindung, weist der ringförmige Abschnitt eine erste und eine zweite Krümmungsachse auf, die im wesentlichen senkrecht aufeinander stehen. Die erste Krümmungsachse ist dabei beispielsweise die Ringmittelachse. In einem Bereich des ringförmigen Abschnittes, der der zweiten Lichtaustrittsfläche benachbart ist, ist der ringförmige Abschnitt beispielsweise zusätzlich nach außen gekrümmt. Diese zusätzliche Krümmung erhöht die Anzahl der Lichtreflexionen und erhöht dadurch die Homogenisierungswirkung des Lichtemissionselementes.

Gemäß einer weiteren vorteilhaften Ausgestaltung der Erfindung umfasst der Lichtführungsabschnitt Grenzflächen, die eine mikrostrukturierte, insbesondere eine prismatisch strukturierte Form aufweisen. An diesen Strukturen wird auftreffendes LED-Licht stark gestreut und somit weiter vergleichmäßigt. Die Homogenität des austretenden LED-Lichtes wird dadurch weiter erhöht.

Weitere vorteilhafte Ausgestaltungen der Erfindung ergeben sich aus den nicht zitierten Unteransprüchen sowie anhand der nun folgenden Beschreibung eines in den Figuren dargestellten Ausführungsbeispiels. Darin zeigen:
Fig. 1 eine schematische Darstellung eines Ausführungsbeispiels einer erfindungsgemäßen Leuchte in perspektivischer Ansicht,
Fig. 2 die Leuchte aus Fig. 1 in Draufsicht,
Fig. 3 die Leuchte aus Fig. 2 in Seitenansicht gemäß Ansichtspfeil III,
Fig. 4 einen Schnitt durch die Leuchte aus Fig. 2 entlang der Schnittlinie IV-IV,
Fig. 5 einen Schnitt durch die Leuchte aus Fig. 2 entlang der Schnittlinie V-V,
   und
Fig. 6 die Leuchte gemäß Fig. 5 mit einer verschwenkten Aufnahmeeinrichtung für eine zweite Lichtquelle.

Fig. 1 zeigt in perspektivischer Ansicht eine in ihrer Gesamtheit mit 10 bezeichnete, erfindungsgemäße Leuchte. Die Leuchte 10 ist im wesentlichen topfförmig ausgebildet und weist einen kreisringförmigen Rahmen 23 auf, an dem radial abstehende plattenförmige Befestigungsansätze 11 angebracht sind, mit denen die Leuchte 10 z.B. in einem dafür vorgesehenen Einbauraum in einer Deckenwand eines Raumes befestigt werden kann.

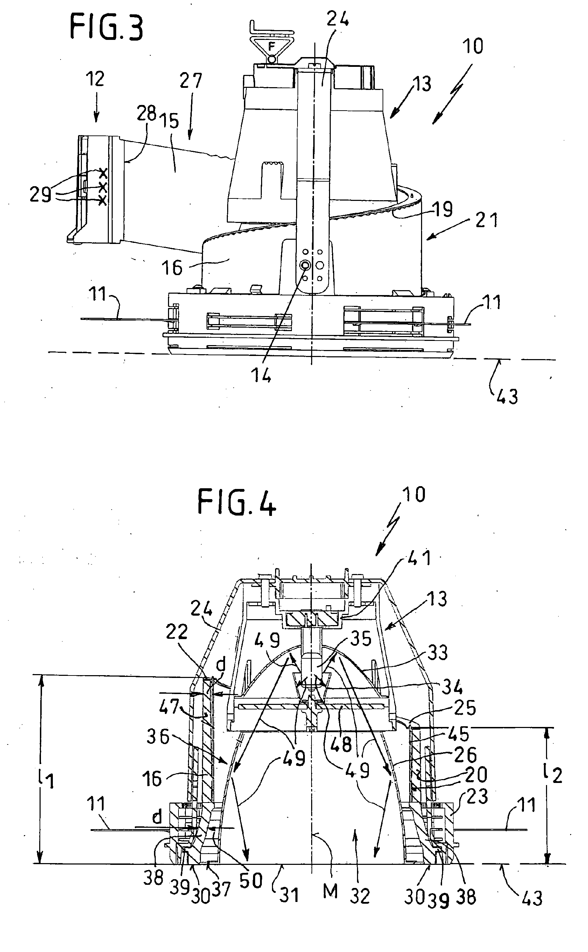

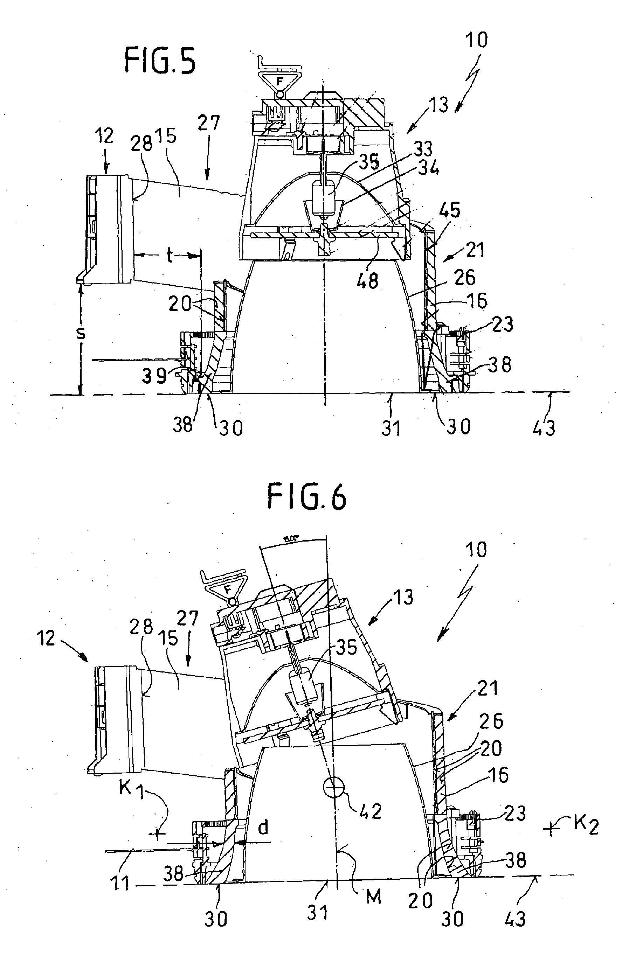

Der Rahmen 23 weist weiterhin axial abstehende plattenförmige Fortsätze 40 auf, an denen über einen Bügel 24 eine Aufnahmeeinrichtung 13 für eine in Fig. 4 dargestellte Lichtquelle 35 angebracht ist. Der Bügel 24 ist mit den plattenförmigen Fortsätzen 40 über Gelenke 14 verbunden, wodurch die Aufnahmeeinrichtung 13 um eine in Fig. 6 angedeutete Achse 42 herum schwenkbar ist. Die Aufnahmeeinrichtung 13 ist in der gewünschten Stellung arretierbar.

Die Leuchte 10 ist über Spannungsversorgungsleitungen an eine Spannungsquelle angeschlossen, wobei die Spannungsversorgungsleitungen der Übersichtlichkeit halber nicht dargestellt sind.

In Fig. 4 ist der Aufbau der Aufnahmeeinrichtung 13 zu erkennen. Die Aufnahmeeinrichtung 13 umfasst einen Sockel 41, an dem die Lichtquelle 35, z.B. eine Halogenlampe, angeordnet ist. Die Aufnahmeeinrichtung 13 weist zudem einen ersten parabolförmigen Reflektor 33 und einen zweiten im wesentlichen trichterförmigen Reflektor 34 auf, die das Licht der Lichtquelle 35 vergleichmäßigen. Das Licht trifft zu einem großen Teil zunächst auf den Reflektor 34, der das Licht dem Reflektor 33 zuführt. Vom Reflektor 33 kommend tritt das Licht dann durch eine Streuscheibe 48 hindurch und wird über einen weiteren, der Leuchte 10 zugeordneten Reflektor 26, der einen Hohlraum 32 umgibt, einer kreisscheibenförmigen Lichtaustrittsfläche 31 zugeführt durch die hindurch das von der Lampe 35 ausgestrahlte Licht die Leuchte verläßt. Die Pfeile 49 geben den Weg des Lichtes ausgehend von der Lichtquelle 35 schematisch wieder.

Der Reflektor 26 wird von einem ringförmigen Stabilisierungselement-Element 50 umschlossen, dessen bezüglich Fig. 4 untere Seite eine kreisringförmige Fläche 37 bildet, die unmittelbar an die Lichtaustrittsfläche 31 angrenzt.

Weiterhin weist die Leuchte 10 eine beispielsweise in Fig. 3 dargestellte Trageinrichtung 12 für mehrere schematisch angedeutete Leuchtdioden 29 auf. Die Trageinrichtung 12 ist, wie später noch eingehender erörtert wird, von der Aufnahmeeinrichtung 13 beabstandet.

Die Leuchtdioden 29 stellen im Sinne dieser Patentanmeldung die erste Lichtquelle dar. Die von der Aufnahmeeinrichtung 13 umfasste Lichtquelle 35 wird als zweite Lichtquelle bezeichnet.

Die Trageinrichtung 12 für die Leuchtdioden ist über einen Einstrahlabschnitt 15, der im wesentlichen die Form eines langgestreckten schiefen Prismas mit rechteckiger Grundfläche hat, mit einem ringförmigen Abschnitt 16 verbunden. Der Einstrahlabschnitt 15 ist gegenüber der Lichtaustrittsfläche 31 geneigt und weist eine Lichteintrittsfläche 28 für das Licht der Leuchtdioden 29 auf. Das LED-Licht wird durch den Einstrahlabschnitt 15 einer beispielsweise in Fig. 4 dargestellten Lichteintrittsfläche 47, die den Einstrahlabschnitt 15 mit dem ringförmigen Abschnitt 16 verbindet, zugeführt und tritt durch diese Fläche hindurch in den ringförmigen Abschnitt 16 ein.

Wie sich aus Fig. 2 ergibt, steht der Einstrahlabschnitt 15 tangential von dem ringförmigen Abschnitt 16 ab und bewirkt dadurch eine Einstrahlung des LED-Lichtes in Umfangsrichtung 17 des ringförmigen Abschnittes 16. Die Abschnitte 15 und 16 bilden gemeinsam einen Lichtführungsabschnitt 27, der das Licht der Leuchtdioden 29 in einer durch die geometrische Form des Lichtführungsabschnittes 27 definierten Lichtführungsrichtung entlang einer Lichtführungsbahn, die in Draufsicht im wesentlichen die Form eines "p" hat, weiterleitet. Der Lichtführungsabschnitt 27 kann beispielsweise ein- oder zweistückig ausgebildet sein.

Beim Ausführungsbeispiel ist der Lichtführungsabschnitt 27 als Vollkörper ausgebildet, der aus einem lichtdurchlässigen Material wie z.B. aus Glas oder aus einem lichtdurchlässigen Kunststoff, insbesondere aus PMMA, besteht. In diesem Fall ist eine Weiterleitung des LED-Lichtes über Totalreflexion an den Grenzflächen möglich. Eine Ausbildung des Lichtführungsabschnittes 27 als Hohlkörper ist alternativ denkbar. Die Lichtweiterleitung erfolgt dann z.B. an verspiegelten Innenflächen des Abschnittes 27.

Wie in Fig. 4 dargestellt, ist die Unterseite des ringförmigen Abschnittes 16 als kreisringförmige Lichtaustrittsfläche 30 ausgebildet, die in der durch die Lichtaustrittsfläche 31 definierten Ebene 43 liegt. Die Lichtaustrittsfläche 30 umschließt die Lichtaustrittsfläche 31, wobei sich zwischen den Lichtaustrittsflächen 30 und 31 das Element 50 mit seiner z.B. lichtundurchlässigen Fläche 37 befindet.

Die Lichtaustrittsfläche 30, durch die das LED-Licht austritt, stellt im Sinne dieser Patentanmeldung die erste Lichtaustrittsfläche dar; die der zweiten Lichtquelle 35 zugeordnete Lichtaustrittsfläche 31 stellt die zweite Lichtaustrittsfläche dar.

Die Trageinrichtung 12 befindet sich auf der Seite der Ebene 43, auf der sich auch die Aufnahmeeinrichtung 13 befindet und ist gemäß Fig. 5 von der Ebene 43 um eine Länge s beabstandet. Zudem weist die Trageinrichtung 12 entlang der Ebene 43 von der ersten Lichtaustrittsfläche 30 einen Abstand t auf. Durch die Beabstandung der Trageinrichtung 12 gegenüber der ersten Lichtaustrittsfläche 30 sowohl senkrecht zur Ebene 43 (Abstand s), als auch entlang der Ebene 43 (Abstand t) kann eine thermische Beeinflussung der Leuchtdioden 29 durch die zweite Lichtquelle 35 weitgehend vermieden werden. Außerdem wird durch diese Anordnung der Trageinrichtung 12 eine vereinfachte Bauweise der Leuchte 10 möglich. Die Trageinrichtung 12 kann in einem äußeren Bereich der Leuchte 10 angeordnet werden, in dem sich keine weiteren Bauteile der Leuchte befinden, so daß die Trageeinrichtung 12 leicht zugänglich ist und eine Montage einfach durchführbar ist.

Wie in den Fig. 5 und 6 gezeigt weist der ringförmige Abschnitt 16 in dem vom Rahmen 23 umgebenen Bereich einen im wesentlichen trichterförmig ausgebildeten Axial-Abschnitt 38 auf. Gemäß Fig. 5 weist dieser Abschnitt 38 nahe der Ebene 43 eine Stufe 39 auf. Eine alternative Ausbildung des trichterförmigen Abschnittes 38 ist in Fig. 6 dargestellt. Die Wandstärke nimmt dort mit kleiner werdendem Abstand zur Ebene 43 kontinuierlich zu; es ist keine Stufe vorgesehen. Bei beiden Ausführungen weisen die Abschnitte 38 zusätzlich zur Krümmung in Umfangsrichtung 17 um die Krümmungsachse M eine Krümmung in mindestens einer weiteren Richtung auf. Beim Ausführungsbeispiel krümmt sich der Axial-Abschnitt 38 um eine Krümmungsachse, die in Fig. 6 mit K₁ und K₂ bezeichnet ist und eine Kreisbahn bildet, die den Axial-Abschnitt 38 umläuft.

Die Lichteintrittsfläche 28, der Lichtführungsabschnitt 27 und die Lichtaustrittsfläche 30 bilden gemeinsam ein Lichtemissionselement 21. Der Lichtführungsabschnitt 27 und das Lichtemissionselement 21 unterscheiden sich somit dadurch, dass das Lichtemissionselement 21 im Gegensatz zum Lichtführungsabschnitt 27 auch noch die Lichteintrittsfläche 28 und die Lichtaustrittsfläche 30 umfasst.

Das Licht der Leuchtdioden 29 und das Licht der zweiten Lichtquelle 35 kann sich sowohl in der Farbe, als auch in der Intensität unterscheiden. Beide Lichtquellen 29, 35 können gleichzeitig Licht emittieren, müssen dies aber nicht notwendigerweise. Den Lichtquellen 29, 35 können Spannungsversorgungs- und Steuereinrichtungen zugeordnet sein, die ein unabhängiges Ansteuern der beiden Lichtquellen 29, 35 voneinander ermöglichen. Die Steuereinrichtung für die Leuchtdioden 29 kann beispielsweise in der Trageinrichtung 12 untergebracht sein. Die Steuereinrichtung für die zweite Lichtquelle 35 kann beispielsweise in der ihr zugeordneten Aufnahmeeinrichtung 13 angeordnet sein.

Es ist denkbar, dass die Leuchte 10 derart aussteuerbar ist, daß z.B. nur die Leuchtdioden 29 Licht emittieren und dadurch z.B. ein Notlicht bereitstellen. Emittieren beide Lichtquellen 29, 35 gleichzeitig Licht, übernimmt das Leuchtdioden-Licht beispielsweise die Funktion eines Akzentlichtes. Das Leuchtdioden-Licht kann zur Kontrastverminderung im Bereich der zweiten Lichtaustrittsfläche 31 dienen. Insbesondere können beide Lichtquellen 29, 35 dimmbar ausgebildet sein.

Durch die beschriebene geometrische Form des Lichtemissionselementes 21 wird eine besonders gute Durchmischung und Homogenisierung des von den Leuchtdioden 29 ausgesandten Lichtes erreicht. Ein möglicher Lichtweg 46 ist in Fig. 2 als Pfeilzug nach Art einer Zick-Zack-Linie schematisch dargestellt. Aus Gründen der Übersichtlichkeit ist nur der Anfang des Lichtweges 46 in der Nähe des Einstrahlabschnittes 15 dargestellt. Der Großteil des LED-Lichtes durchläuft den ringförmigen Abschnitt 16 mehrfach in Umfangsrichtung 17, bevor er auf die erste Lichtaustrittsfläche 30 trifft und aus der Leuchte 10 austritt. Diese Reflexionen erfolgen vorwiegend an den gekrümmten Innenflächen 20 des Lichtemissionselementes 21. Bei jeder Reflexion werden die LED-Lichtkegel aufgeweitet und vermischen sich so.

Bei dem Ausführungsbeispiel ist zur Optimierung der Durchmischung und Homogenisierung an der oberen Begrenzungsfläche 44 (vgl. Fig. 1) des Einstrahlabschnittes 15 eine prismatische Struktur 18 vorgesehen. Prismatische Strukturen 19 sind zudem an der oberen Begrenzungsfläche 22 des ringförmigen Abschnittes 16 angebracht. Durch die Strukturen 18 und 19 wird eine Streuung des auftreffenden LED-Lichtes bewirkt.

Wie in Fig. 4 dargestellt, ist der ringförmige Abschnitt 16 durch ein rohrförmiges Abdeckelement 45 vom Innenraum 36 der Leuchte 10 getrennt. Dadurch wird ein Eindringen des Lichtes der zweiten Lichtquelle 35 in das Lichtemissionselement 21 weitgehend verhindert. Ein weiteres Abdeckelement 25 kann sich bezüglich Fig. 4 oberhalb der oberen Begrenzungsfläche 22 des ringförmigen Abschnittes 16 befinden.

Bei dem beschriebenen Ausführungsbeispiel ist die Lichteintrittsfläche 28 derart von der ersten Lichtaustrittsfläche 30 beabstandet und relativ zu dieser angeordnet, dass kein Teil der ersten Lichtaustrittsfläche 30 innerhalb des Lichtführungsabschnittes 27 auf die Lichteintrittsfläche 28 projizierbar ist. Dies bedeutet, dass kein Punkt der ersten Lichtaustrittsfläche 30 über eine gerade Linie, die vollständig innerhalb des Lichtführungsabschnittes 27 liegt, mit der Lichteintrittsfläche 28 verbunden werden kann. Durch diese Ausgestaltung kann bei kompakter Bauweise des Lichtemissionselementes 21 ein sehr langer Lichtweg von der Lichteintrittsfläche 28 bis zur Lichtaustrittsfläche 30 realisiert werden.

Fig. 4 zeigt den Zusammenhang zwischen den unterschiedlichen Höhen l₁, l₂ des ringförmigen Abschnittes 16 und seiner Wandstärke d. Bei dem Ausführungsbeispiel sind die Höhen l₁ und l₂ größer, insbesondere deutlich größer als die Wandstärke d. Dadurch wird ein mehrmaliges Umlaufen des LED-Lichtes innerhalb des ringförmigen Abschnittes 16 und ein homogenisierter Lichtaustritt ermöglicht.

Die Höhe des ringförmigen Abschnittes 16 nimmt in Umfangsrichtung 17 ausgehend von der Fläche 47, an der der Einstrahlabschnitt 15 in den ringförmigen Abschnitt 16 übergeht (Höhe l₁), ab. Um etwa 180° von der Fläche 47 in Umfangsrichtung 17 entfernt hat der ringförmige Abschnitt 16 die kleinere Höhe l₂. Durch diese kontinuierliche Verjüngung des ringförmigen Abschnittes 16 wird eine konstante Energiedichte des LED-Lichtes innerhalb des Lichtemissionselementes 21 und damit eine besonders homogene Lichtabstrahlung erreicht.

Abschließend sei erwähnt, dass eine Leuchte gemäß dem Ausführungsbeispiel bereits mit sehr wenigen Leuchtdioden, z.B. einer roten, einer grünen und einer blauen Leuchtdiode, einen sehr homogenen Lichtaustritt des LED-Lichtes ermöglicht.

## Patentansprüche

1. Leuchte (10) zur Anbringung an einer Gebäudefläche oder einer Gebäudeteilfläche, wie z.B. an einer Decke, einer Wand oder einem Boden eines Raumes, umfassend eine Trageinrichtung (12) für mehrere Leuchtdioden (29) und ein Lichtemissionselement (21), welches eine der Trageinrichtung (12) benachbarte Lichteintrittsfläche (28) für das von den Leuchtdioden (29) ausgesandte Licht, eine Lichtaustrittsfläche (30) und einen Lichtführungsabschnitt (27) umfasst, der die Lichteintrittsfläche (28) und die Lichtaustrittsfläche (30) miteinander verbindet, **dadurch gekennzeichnet, dass** der Lichtführungsabschnitt (27) gekrümmte Innenflächen (20) aufweist, und dass eine Weiterleitung des Lichtes von der Lichteintrittsfläche (28) zu der Lichtaustrittsfläche (30) durch den Lichtführungsabschnitt (27) hindurch im wesentlichen über mehrfache Reflexionen an den Innenflächen (20) erfolgt.

2. Leuchte nach Anspruch 1, **dadurch gekennzeichnet, dass** die Lichteintrittsfläche (28) derart von der Lichtaustrittsfläche (30) beabstandet und relativ zu dieser angeordnet ist, dass höchstens ein geringer Teil der Lichtaustrittsfläche (30) innerhalb des Lichtführungsabschnittes (27) auf die Lichteintrittsfläche (28) projizierbar ist.

3. Leuchte zur Anbringung an einer Gebäudefläche oder einer Gebäudeteilfläche, wie z.B. an einer Decke, einer Wand oder einem Boden eines Raumes, umfassend eine Trageinrichtung (12) für mehrere Leuchtdioden (29), ein Lichtemissionselement (21), welches eine der Trageinrichtung (12) benachbarte Lichteintrittsfläche (28) für das von den Leuchtdioden (29) ausgesandte Licht, eine erste Lichtaustrittsfläche (30) und einen Lichtführungsabschnitt (27) aufweist, der die Lichteintrittsfläche (28) und die erste Lichtaustrittsfläche (30) miteinander verbindet, sowie eine Aufnahmeeinrichtung (13) für eine zweite Lichtquelle (35), und eine dieser Aufnahmeeinrichtung (13) zugeordnete zweite Lichtaustrittsfläche (31), **dadurch gekennzeichnet, dass** die Lichteintrittsfläche (28) derart von der ersten Lichtaustrittsfläche (30) beabstandet und relativ zu dieser angeordnet ist, dass höchstens ein geringer Teil der ersten Lichtaustrittsfläche (30) innerhalb des Lichtführungsabschnittes (27) auf die Lichteintrittsfläche (28) projizierbar ist.

4. Leuchte nach Anspruch 3, **dadurch gekennzeichnet, dass** der Lichtführungsabschnitt (27) gekrümmte Innenflächen (20) aufweist, und dass eine Weiterleitung des Lichtes von der Lichteintrittsfläche (28) zu der ersten Lichtaustrittsfläche (30) durch den Lichtführungsabschnitt (27) hindurch im wesentlichen über mehrfache Reflexionen an den Innenflächen (20) erfolgt.

5. Leuchte (10) zur Anbringung an einer Gebäudefläche oder einer Gebäudeteilfläche, wie z.B. an einer Decke, einer Wand oder einem Boden eines Raumes, insbesondere nach einem der vorhergehenden Ansprüche, umfassend eine Trageinrichtung (12) für mehrere Leuchtdioden (29), ein Lichtemissionselement (21), welches eine der Trageinrichtung (12) benachbarte Lichteintrittsfläche (28) für das von den Leuchtdioden (29) ausgesandte Licht, eine erste im wesentlichen kreisringförmig ausgebildete Lichtaustrittsfläche (30) und einen Lichtführungsabschnitt (27) aufweist, der die Lichteintrittsfläche (28) und die erste Lichtaustrittsfläche (30) miteinander verbindet, eine Aufnahmeeinrichtung (13) für eine zweite Lichtquelle (35), und eine dieser Aufnahmeeinrichtung (13) zugeordnete zweite Lichtaustrittsfläche (31), die von der ersten Lichtaustrittsfläche (30) umschlossen wird, **dadurch gekennzeichnet, dass** das Lichtemissionselement einen im wesentlichen ringförmigen Abschnitt (16) und einen Einstrahlabschnitt (15) umfasst, wobei der Einstrahlabschnitt (15) die Trageinrichtung (12) der Leuchtdioden (29) mit dem ringförmigen Abschnitt (16) verbindet, und wobei die Höhe (l₁,l₂) des ringförmigen Abschnitts größer ist als seine Wandstärke (d).

6. Leuchte nach Anspruch 5, **dadurch gekennzeichnet, daß** das Licht der Leuchtdioden (29) im wesentlichen in Umfangsrichtung (17) des ringförmigen Abschnitts (16) in diesen einstrahlt und daß eine Weiterleitung des Lichtes innerhalb des ringförmigen Abschnittes (16) im wesentlichen in Umfangsrichtung (17) erfolgt.

7. Leuchte nach Anspruch 5 oder 6, **dadurch gekennzeichnet, dass** sich der ringförmige Abschnitt (16) im Querschnitt zu der ersten Lichtaustrittsfläche (31) hin trichterförmig erweitert.

8. Leuchte nach einem der Ansprüche 5 bis 7, **dadurch gekennzeichnet, dass** die Wandstärke (d) des ringförmigen Abschnittes (16) zu der ersten Lichtaustrittsfläche (31) hin zunimmt.

9. Leuchte nach einem der Ansprüche 5 bis 8, **dadurch gekennzeichnet, dass** der ringförmige Abschnitt (16) eine erste Krümmungsachse (M) und eine zweite Krümmungsachse (K₁, K₂) aufweist, die im wesentlichen senkrecht aufeinander stehen.

10. Leuchte nach einem der vorhergehenden Ansprüche, **dadurch gekennzeichnet, dass** das Lichtemissionselement (21) einen ringförmigen Abschnitt (16) und einen tangential von diesem Abschnitt (16) abstehenden Einstrahlabschnitt (15) umfasst.

11. Leuchte nach einem der vorhergehenden Ansprüche, **dadurch gekennzeichnet, dass** die Lichtaustrittsfläche (30) des Lichtemissionselementes (21) im wesentlichen in einer Ebene (43) liegt, dass die Trageinrichtung (12) von dieser Ebene (43) beabstandet ist, und dass die Trageinrichtung (12) entlang der Ebene (43) von der Lichtaustrittsfläche (30) beabstandet angeordnet ist.

12. Leuchte nach einem der vorhergehenden Ansprüche, **dadurch gekennzeichnet, dass** das Lichtemissionselement (21) einen ringförmigen Abschnitt (16) umfasst, welcher sich ausgehend von einer Stelle (47), an der das LED-Licht in den ringförmigen Abschnitt eindringt, in Umfangsrichtung (17) verjüngt.

13. Leuchte nach einem der vorhergehenden Ansprüche, **dadurch gekennzeichnet, dass** das Lichtemissionselement (21) im wesentlichen massiv ausgebildet ist und aus einem lichtdurchlässigen Material, wie z.B. Glas oder Kunststoff, insbesondere aus PMMA, besteht.

14. Leuchte nach einem der vorhergehenden Ansprüche, **dadurch gekennzeichnet, dass** das Lichtemissionselement (21) Innenflächen (20, 22, 44) umfasst, die wenigstens teilweise verspiegelt sind.

15. Leuchte nach einem der vorhergehenden Ansprüche, **dadurch gekennzeichnet, dass** innerhalb des Lichtemissionselementes (21 ) Totalreflexion stattfindet.

16. Leuchte nach einem der vorhergehenden Ansprüche, **dadurch gekennzeichnet, dass** die Leuchtdioden (29) zu einer Baueinheit zusammengefasst sind.

17. Leuchte nach einem der vorhergehenden Ansprüche, **dadurch gekennzeichnet, dass** der Lichtführungsabschnitt (27) Grenzflächen (22, 44) umfasst, die eine mikrostrukturierte, insbesondere eine prismatisch strukturierte Form (18, 19) aufweisen.
